# FASCICULE DE BREVET EUROPEEN

(11) **EP 1 894 502 B1**
(45) Date de publication et mention de la délivrance du brevet: **25.10.2017**
(21) Numéro de dépôt: 07290947.6
(22) Date de dépôt: 26.07.2007
(51) Int. Cl.: A47J 36/02, B05D 5/08, B05D 7/00, B05D 7/14

(54) **ARTICLE CULINAIRE PRÉSENTANT DES PROPRIÉTÉS HYDROPHOBES AMÉLIORÉES ET PROCÉDÉ DE FABRICATION D'UN TEL ARTICLE**
KÜCHENGEGENSTAND, DER VERBESSERTE HYDROPHOBE EIGENSCHAFTEN AUFWEIST, UND VERFAHREN ZUR HERSTELLUNG EINES SOLCHEN GEGENSTANDS
CULINARY ITEM WITH IMPROVED HYDROPHOBIC PROPERTIES AND METHOD OF PRODUCING SUCH AN ITEM

(30) Priorité: 31.07.2006 FR 0607012
(43) Date de publication de la demande: 05.03.2008
(73) Titulaire: SEB S.A., 69130 Ecully (FR)
(72) Inventeur: Berrux, Aurélien, 73000 Chambery (FR); Muller, Pierre-Jean, 74540 Saint Felix (FR); Périllon, Jean-Luc, 26130 Saint Paul 3 Chateaux (FR)
(74) Mandataire: Novagraaf Technologies

(56) Documents cités:
- DE-A1- 10 163 646
- US-A- 3 202 542
- US-A- 3 318 717
- US-A- 3 463 660
- US-A1- 2003 138 661

## Description

La présente invention concerne un article culinaire présentant des propriétés hydrophobes améliorées et, en particulier, une résistance améliorée à certains détergents tels que ceux utilisés dans les lave-vaisselle. L'invention concerne également le procédé de fabrication d'un tel article culinaire.

Parmi les différentes voies permettant de renforcer la résistance des articles culinaires aux détergents utilisés dans les lave-vaisselle, on peut citer celle enseignée par le document US 2003/0138661.

Cet état de la technique décrit notamment un article culinaire présentant des propriétés hydrophobes améliorées, ledit article culinaire comprenant un support et un premier revêtement, ledit premier revêtement étant déposé sur au moins sur une première face du support et étant obtenu par l'application, puis la cuisson, d'au moins une couche d'une composition sol-gel.

L'emploi d'une composition sol-gel permet de conférer des propriétés hydrophobes au premier revêtement et donc au moins à la face du support de l'article culinaire dotée de ce premier revêtement. En effet, comme indiqué dans le document US 2003/0138661, la composition sol-gel permet de réaliser une couche de protection qui adhère au support, qui est transparente et qui confère au support ainsi revêtu une résistance chimique durable.

Une composition sol-gel s'entend d'une composition comprenant une suspension ou une solution colloïdale de particules solides ou précurseurs dans un solvant qui, par agrégation des particules, conduit à la formation d'un gel puis à celle d'un solide, cette agrégation étant classiquement obtenue sous l'effet d'un catalyseur et/ou de la température.

Les compositions sol-gel décrites dans le document US 2003/0138661 mettent en oeuvre une suspension colloïdale de particules solides dans un solvant organique, tel qu'un alcool. Les particules solides envisagées par ce document sont des alcoxydes métalliques hydrolysés, en particulier de titane, de zirconium, d'aluminium et/ou de silicium.

Dans cet état de la technique, les compositions sol-gel sont indifféremment appliquées sur des supports métalliques, notamment en aluminium, en fonte, en acier, en acier inoxydable. De tels supports sont indiqués comme pouvant être lisses, brossés ou anodisés dans le cas particulier de l'aluminium.

Toutefois, l'expérience montre que tout type de composition sol-gel, qui répond à la définition donnée ci-dessus par le document US 2003/0138661, ne permet pas d'obtenir des propriétés hydrophobes satisfaisantes.

Ce constat est d'autant plus vrai que les détergents utilisés aujourd'hui dans les lave-vaisselle ont des formulations de plus en plus agressives afin d'optimiser les performances de nettoyage. De telles formulations couplent en effet une alcalinité de plus en plus élevée avec la génération d'oxygène naissant.

Le problème posé par la présente invention est donc de remédier aux inconvénients mentionnés ci-dessus, en proposant un article culinaire compatible avec un mode de nettoyage en lave-vaisselle, même en présence de détergents particulièrement agressifs.

Une solution à ce problème posé est donc de proposer un article culinaire présentant des propriétés hydrophobes améliorées, notamment une résistance améliorée aux détergents utilisés dans les lave-vaisselle, ledit article culinaire comprenant un support et un premier revêtement, ledit premier revêtement étant déposé sur au moins sur une première face du support et étant obtenu par l'application, puis la cuisson, d'au moins une couche d'une composition sol-gel, caractérisé en ce qu'il comprend en outre au moins un deuxième revêtement déposé sur le premier revêtement, ledit deuxième revêtement étant obtenu par l'application, puis la cuisson, d'au moins une couche d'une composition à base de silicone et présentant une épaisseur comprise entre 15 et 25 microns.

De façon surprenante, la demanderesse a trouvé que la réalisation, sur un premier revêtement obtenu à partir d'une composition sol-gel, d'un revêtement obtenu à partir d'une composition à base de silicone et présentant une épaisseur comprise entre 15 et 25 microns permettait d'améliorer considérablement les propriétés hydrophobes déjà conférées par le premier revêtement.

Il est connu de l'homme de l'art de déposer sur un premier revêtement de type sol-gel préalablement déposé sur un substrat métallique, un deuxième revêtement destiné à remplir les pores du premier revêtement.

Ainsi, DE 10163646 décrit un matériau inorganique pour revêtement de surface comprenant :
- un substrat, qui peut être métallique, recouvert partiellement ou totalement,
- un revêtement poreux, par exemple un matériau sol-gel présentant des propriétés hydrophobes, et
- un deuxième revêtement, réalisé en un matériau nanocomposite, qui est déposé sur le revêtement poreux pour en remplir les pores, ce deuxième revêtement présentant un meilleur comportement mécanique que le revêtement poreux.

Toutefois, DE 10163646 préconise de ne pas utiliser un matériau à base de silicone, car ce dernier est plus mou et moins stable d'un point de vue mécanique qu'un matériau de type nanocomposite.

Or, la demanderesse a découvert de manière surprenante et inattendue, que si l'on dépose sur un premier revêtement de type sol-gel, une couche obtenue à partir d'une composition à base de silicone d'épaisseur comprise entre 15 et 25 microns, le premier revêtement se comporte comme une couche de primaire d'accrochage pour ce deuxième revêtement qui y adhère parfaitement, et la tenue mécanique de l'ensemble est améliorée.

L'article culinaire selon l'invention doit en outre conserver au cours du temps, au niveau au moins de la première face du support revêtue du premier revêtement, un aspect similaire à celui d'un article culinaire dépourvu d'un tel premier revêtement et ne pas se détériorer suite à des cycles répétés de nettoyage en lave-vaisselle.

La présente invention a ainsi pour objet un article culinaire du type précité, qui présente des propriétés hydrophobes améliorées, et notamment une résistance améliorée aux détergents utilisés dans les lave-vaisselles.

Dans une version particulièrement préférée de l'invention, cet article culinaire est tel que la composition sol-gel de ladite au moins une couche comprend un solvant et au moins deux précurseurs, le premier précurseur étant un composé de formule générale M₁(OR₁)ₙ, M₁ étant un métal, R₁ étant un groupement alkyle et n étant un nombre entier correspondant à la valence maximale du métal M₁, le deuxième précurseur étant un composé de formule générale M₂(OR₂)₍ₙ₋ₚ₎R₂'ₚ, M₂ étant un métal, R₂ étant un groupement alkyle, R₂' étant un groupement alkyle, phényle ou cyclohexyle, n étant un nombre entier correspondant à la valence maximale du métal M₂ et p=1, M₁ et M₂ étant individuellement choisis parmi Si, Zr, Ti, Sn, Al, Ce, Nb ou Ln.

La composition sol-gel comprenant au moins les deux précurseurs répondant aux formules mentionnées ci-dessus permet, après cuisson, de réaliser un premier revêtement qui adhère parfaitement à la première face du support sur laquelle ce premier revêtement est réalisé, que cette face présente une porosité intrinsèque ou qu'elle soit au contraire lisse.

Du fait de l'excellente cohésion entre cette première face du support et le premier revêtement, on évite tout phénomène de délaminage à l'origine de l'altération de cette première face du support.

L'article culinaire selon la présente invention présente l'avantage majeur de pouvoir être réalisé avec un grand choix de matières pour le support.

En effet, ce dernier peut être métallique, par exemple en aluminium anodisé ou non ou en alliage d'aluminium poli, brossé ou microbillé, en acier inoxydable poli, brossé ou microbillé, en fonte, en cuivre martelé ou poli, en verre ou en céramique.

Dans le cas particulier où la première face du support présente une rugosité, voire une porosité, la composition sol-gel réalise en quelque sorte un colmatage des petites aspérités et des pores et crée une couche barrière, ou de protection, entre la première face du support et l'environnement extérieur. Cette première face est ainsi protégée de l'action des détergents, en particulier des formulations particulièrement agressives des produits utilisés dans les lave-vaisselle qui couplent forte alcalinité et libération d'oxygène actif.

Ce phénomène de colmatage est particulièrement intéressant lorsque le support de l'article culinaire est réalisé en aluminium ou en alliage d'aluminium, et qu'il présente, au moins sur sa première face, une couche d'anodisation sur laquelle est déposé le premier revêtement.

Le premier revêtement réalisé à partir de la composition sol-gel conforme à l'invention adhère parfaitement à la couche d'anodisation en raison de la porosité intrinsèque de cette couche d'anodisation. L'article culinaire présente donc une excellente cohésion entre la couche d'anodisation et le premier revêtement, ce qui évite tout phénomène de délaminage.

Dans une variante de l'invention, la composition sol-gel de ladite couche comprend, en plus des premier et second précurseurs mentionnés ci-dessus, un troisième précurseur, ce troisième précurseur étant un composé de formule générale M₃(OR₃)₍ₙ₋ₚ₎R₃'ₚ, M₃ étant un métal choisi parmi Si, Zr, Ti, Sn, Al, Ce, Nb ou Ln, R₃ et R₃' étant chacun un groupement alkyle, n étant un nombre entier correspondant à la valence maximale du métal M₃ et p=2.

Le choix du métal pour M₁ et M₂, ainsi que pour M₃ dans le cas de la variante précitée de l'invention, est donné dans un ordre préféré dans le sens décroissant, Si étant par conséquent le métal préférentiellement choisi.

Dans une version avantageuse, mais non impérative, de l'invention, on choisit un même métal M₁, M₂ et, le cas échéant, M₃ pour les deux, ou trois, précurseurs.

Dans une version préférée de l'invention, l'article culinaire comprend en outre un troisième revêtement anti-adhésif déposé sur la seconde face du support. Ce troisième revêtement anti-adhésif est, par exemple, une couche d'émail ou, de préférence, un revêtement à base d'une ou de plusieurs résines fluorocarbonées.

Un autre but de la présente invention consiste à proposer un procédé de fabrication d'un article culinaire présentant des propriétés hydrophobes améliorées, notamment une résistance améliorée aux détergents utilisés dans les lave-vaisselle, ce procédé étant d'industrialisation aisée.

Ce procédé de fabrication comprend les étapes suivantes réalisées sur un support qui présente, de préférence, la forme finale de l'article culinaire :
- l'application, sur au moins une première face du support, d'au moins une couche d'une composition sol-gel, et la cuisson de ladite au moins une couche pour obtenir un premier revêtement.

Selon l'invention, ce procédé est tel qu'il comprend également la réalisation d'un deuxième revêtement 3 après l'étape de réalisation du premier revêtement 2, par application sur le premier revêtement 2 puis cuisson, d'au moins une couche d'une composition à base de silicone dont l'épaisseur est comprise entre 15 et 25 µm.

La composition à base de silicone peut être constituée d'une huile silicone ou d'un mélange d'huiles silicones, ou bien d'une résine silicone ou d'un mélange de résines silicones.

A titre d'huiles silicones utilisables dans la composition à base de silicone de la présente invention, on peut notamment citer les méthyl-phényl silicones et les méthyl silicones.

A titre d'huiles méthyl-phényl silicones, on peut notamment citer les huiles non alimentaires commercialisées par la société WACKER sous la dénomination commerciale WACKER SILICONOL AP150 et par la société DOW CORNING sous la dénomination commerciale DOW CORNING 550 fluid, ainsi que les huiles alimentaires commercialisées par la société WACKER sous la dénomination commerciale WACKER SILICONOL AR00.

A titre d'huile méthyl silicone, on peut notamment citer l'huile commercialisée par la société RHODIA sous la dénomination commerciale RHODIA 47 V 350.

A titre de résine silicone utilisable dans la composition à base de silicone de la présente invention, on peut notamment citer les résines polyester silicones.

Selon une variante du procédé conforme à la présente invention, la composition sol-gel de ladite au moins une couche comprend un solvant et au moins deux précurseurs,
* le premier précurseur étant un composé de formule générale M₁(OR₁)ₙ, M₁ étant un métal, R₁ étant un groupement alkyle et n étant un nombre entier correspondant à la valence maximale du métal M₁, et
* le deuxième précurseur étant un composé de formule générale M₂(OR₂)₍ₙ₋ₚ₎R₂'ₚ, M₂ étant un métal, R₂ étant un groupement alkyle, R₂' étant un groupement alkyle, phényle ou cyclohexyle, n étant un nombre entier correspondant à la valence maximale du métal M₂ et p=1, M₁ et M₂ étant individuellement choisis parmi Si, Zr, Ti, Sn, Al, Ce, Nb ou Ln.

De manière préférée, la composition sol-gel de ladite au moins une couche peut en outre comprendre un troisième précurseur, ce troisième précurseur étant un composé de formule générale M₃(OR₃)₍ₙ₋ₚ₎R₃'ₚ, R₃ étant un groupement alkyle, R₃' étant un groupement alkyle, n étant un nombre entier correspondant à la valence maximale du métal M₃ et p=2, M₃ étant un métal choisi parmi Si, Zr, Ti, Sn, Al, Ce, Nb ou Ln.

Outre l'avantage de la cohésion et de l'adhérence du premier revêtement avec la première face du support de l'article culinaire, le procédé conforme à l'invention est particulièrement simple de mise en oeuvre et peut facilement être envisagé sans bouleversement des processus de fabrication classique des articles culinaires.

Le procédé selon l'invention présente par ailleurs l'avantage de pouvoir être mis en oeuvre sans recours impératif à un traitement mécanique ou chimique préalable de la première face du support destinée à être revêtue par le premier revêtement, ce qui présente un très net avantage d'un point de vue économique mais également écologique.

D'autres avantages et particularités de la présente invention résulteront de la description qui va suivre, donnée à titre d'exemple non limitatif et faite en référence aux figures annexées :
- la figure 1 représente une vue schématique en coupe transversale de la structure d'une portion de fond d'un article culinaire selon une première variante de l'invention,
- la figure 2 représente une vue schématique en coupe transversale de la structure d'une portion de fond d'un article culinaire selon une deuxième variante de l'invention,
- la figure 3 représente une vue schématique en coupe transversale de la structure d'une portion de fond d'un article culinaire selon une troisième variante de l'invention, et
- la figure 4 représente une vue schématique en coupe transversale de l'article culinaire dont la portion de fond est illustrée à la figure 3.

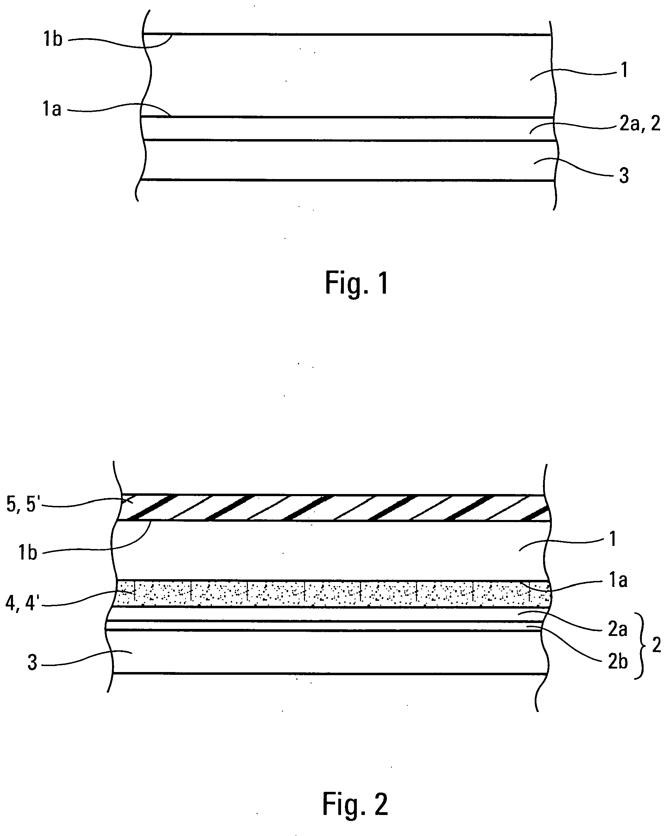

On identifie par des références numériques identiques les éléments communs aux figures 1 à 4.

Sur l'ensemble des figures 1 à 4, on a représenté un support 1.

Ce support 1 peut être réalisé en un métal ou en un alliage métallique. Il peut notamment être en aluminium anodisé ou non ou en alliage d'aluminium poli, brossé ou microbillé, en acier inoxydable poli, brossé ou microbillé, en fonte, ou encore en cuivre martelé ou poli.

Ce support 1 peut également être réalisé en verre, en céramique.

Ce support 1 comprend, au moins sur sa première face 1a, un premier revêtement 2 dont l'épaisseur est de préférence comprise entre 1 et 40 µm, et de préférence de l'ordre de 25 µm.

Un deuxième revêtement 3 est en outre déposé sur le premier revêtement 2 de composition sol-gel.

Ce deuxième revêtement 3 est obtenu par l'application, puis la cuisson, d'au moins une couche 3a d'une composition à base de silicone. L'épaisseur du deuxième revêtement 3 à base de silicone est comprise entre 15 et 25 µm.

L'épaisseur totale des premier 2 et deuxième 3 revêtements superposés est de préférence de l'ordre de 40 µm.

Le premier revêtement 2 est constitué par une couche 2a comprenant une composition sol-gel.

En fonction de l'épaisseur recherchée pour ce premier revêtement 2, celui-ci sera constitué d'une seule couche 2a ou de plusieurs couches, comme on le verra dans la variante illustrée à la figure 2.

Dans une version particulière de l'invention, la composition sol-gel mise en oeuvre dans le cadre de la présente invention comprend un solvant et au moins deux précurseurs, le premier précurseur étant un polyalcoxylate métallique de formule générale M₁(OR₁)ₙ, M₁ étant un métal, R₁ étant un groupement alkyle et n étant un nombre entier correspondant à la valence maximale du métal M₁, et le second précurseur étant un composé de formule générale M₂(OR₂)₍ₙ₋ₚ₎R₂'ₚ, M₂ étant un métal, R₂ étant un groupement alkyle, R₂' étant un groupement alkyle, phényle ou cyclohexyle, n étant un nombre entier correspondant à la valence maximale du métal M₂ et p=1, M₁ et M₂ étant individuellement choisis parmi Si, Zr, Ti, Sn, Al, Ce, Nb ou Ln.

De préférence, la composition sol-gel précédente peut comprendre en outre un troisième précurseur, ce troisième précurseur étant un composé de formule générale M₃(OR₃)₍ₙ₋ₚ₎R₃'ₚ, M₃ étant un métal choisi parmi Si, Zr, Ti, Sn, Al, Ce, Nb ou Ln, R₃ et R₃' étant chacun un groupement alkyle, n étant un nombre entier correspondant à la valence maximale du métal M₃ et p=2.

Plus préférentiellement, on retiendra les formulations suivantes pour les premier, second et, le cas échéant, troisième précurseurs :
* M₁(OR₁)ₙ est tel que R₁ est un alkyle en C₁-C₄ ;
* M₂(OR₂)₍ₙ₋ₚ₎R₂'p est tel que R₂ est un alkyle linéaire, de préférence en C₁-C₃, et R₂' est un alkyle en C₁-C₃ ; et, le cas échéant,
* M₃(OR₃)₍ₙ₋ₚ₎R₃'ₚ est tel que R₃ est un alkyle linéaire, de préférence en C₁-C₃, et R₃' est un alkyle en C₁-C₃, de préférence CH₃ ou C₂H₅.

De préférence, la proportion pondérale pour chacun des premier, second et, le cas échéant, troisième précurseurs est telle que l'on est en présence de 10 à 50% de premier précurseur M₁(OR₁)ₙ, de 50 à 90% de deuxième précurseur M₂(OR₂)₍ₙ₋ₚ₎R₂'ₚ, et de 0 à 20% de troisième précurseur M₃(OR₃)₍ₙ₋ₚ₎R₃'ₚ.

Avantageusement, la composition sol-gel comprend de 30 à 99% en poids, avantageusement de 50 et 99% en poids, et de préférence de 80 à 95% en poids, de solvant, et de 1 à 50% en poids, de préférence entre 5 et 20% en poids, de premier, second et, le cas échéant, troisième précurseurs.

Plus préférentiellement, le solvant est du type hydroxylé, de préférence un alcool primaire.

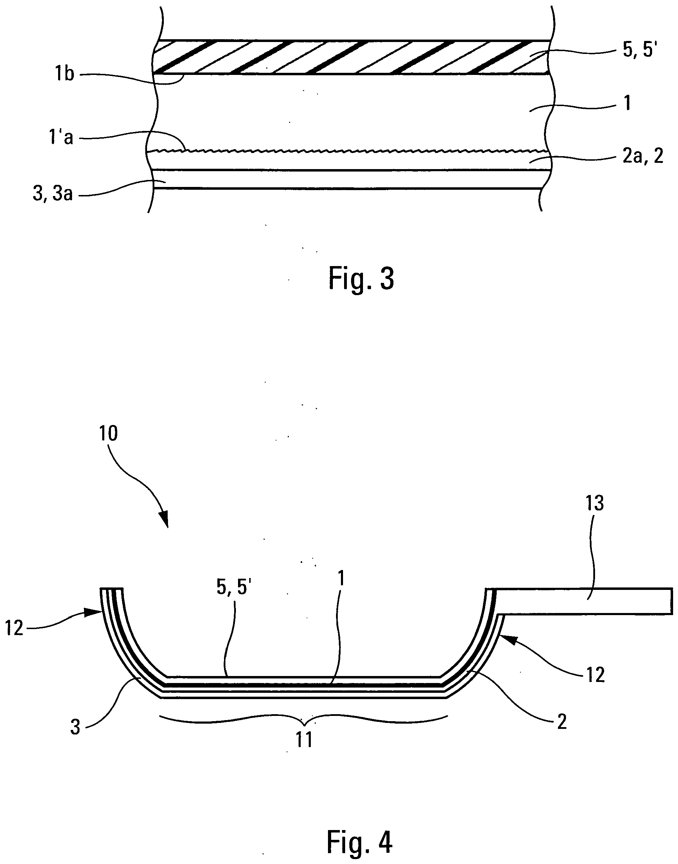

Les précisions relatives à la composition sol-gel des couches formant le premier revêtement 2 décrites ci-dessus sont bien évidemment applicables pour les variantes de l'invention illustrées aux figures 3 à 5.

Dans la variante particulière illustrée à la figure 3, le support 1 est réalisé en aluminium ou en alliage d'aluminium et comprend, au moins sur sa première face 1a, une couche d'anodisation 4 qui est poreuse par définition.

La couche d'anodisation 4 présente de préférence une épaisseur comprise entre 5 et 100 µm.

Aux lieu et place de la couche d'anodisation 4, on peut également envisager une configuration dans laquelle le support 1 présente, au moins sur sa première face 1a, une première couche d'émail 4' qui, contrairement à la couche d'anodisation 4, présente une surface lisse, sauf traitement particulier de surface visant à lui conférer une certaine rugosité.

Dans cette dernière hypothèse, on ne doit bien évidemment pas limiter le choix de la matière du support 1 au seul aluminium ou alliage d'aluminium. N'importe quelle matière pouvant recevoir un revêtement émaillé peut être utilisée.

L'épaisseur de la première couche d'émail 4' est de préférence comprise entre 40 et 100 µm.

Sur cette couche d'anodisation 4, ou sur cette première couche d'émail 4', est déposé le premier revêtement 2. Comme déjà indiqué précédemment, l'épaisseur du premier revêtement 2 est préférablement comprise entre 1 et 40 µm.

En fonction de l'épaisseur recherchée pour ce premier revêtement 2, celui-ci sera constitué d'une ou de plusieurs couches. Dans tous les cas, chaque couche du premier revêtement 2 sera réalisée à partir d'une composition sol-gel.

Sur la figure 1, le premier revêtement 2 est constitué d'une seule couche 2a comprenant une composition sol-gel conforme à l'invention et détaillée ci-dessus.

Sur la figure 2, le premier revêtement 2 est constitué de deux couches 2a et 2b, comprenant toutes deux une composition sol-gel.

Rien n'interdit d'envisager une structure de premier revêtement 2 qui comprendrait trois, voire plus, couches d'une composition sol-gel.

Cependant, dans la pratique, notamment dans le souci de limitation des coûts industriels, on observe qu'un premier revêtement 2 comprenant quatre ou cinq couches n'apporte pas d'effet supplémentaire par rapport à un premier revêtement 2 formé de deux ou trois couches.

Au contraire, dans le cas particulier d'un article culinaire comprenant une couche d'anodisation 4, outre le fait de diminuer notablement l'effet d'aspect "pierre" de l'aluminium anodisé, un nombre trop élevé de couches peut conduire à l'obtention de micro-craquelures nuisant à l'étanchéité de la couche de protection formée par le premier revêtement 2.

Lorsque le premier revêtement 2 est constitué de deux couches 2a, 2b, ou plus, la composition sol-gel de chacune des couches 2a, 2b est de préférence identique, pour des raisons de limitation des coûts industriels.

Cependant, il est également possible de réaliser un premier revêtement 2 dans lequel au moins deux des couches le constituant seraient réalisées à partir de compositions sol-gel différentes, sous réserve que les différentes compositions sol-gel mises en oeuvre dans les différentes couches soient bien évidemment compatibles pour conférer les propriétés de colmatage, et donc d'hydrophobicité recherchées pour l'article revêtu.

Comme représenté sur la figure 2, la seconde face 1b du support 1, opposée à sa première face 1a, est revêtue d'un troisième revêtement anti-adhésif 5, 5', qui présente par ailleurs des propriétés hydrophobes.

Ce troisième revêtement anti-adhésif peut être constitué par au moins une couche d'émail 5', ou plus généralement au moins une couche à base de résine thermostable résistant à au moins 200°C.

Dans le cas où le troisième revêtement anti-adhésif 5 est obtenu à partir d'une composition comprenant une résine thermostable résistant à au moins 200°C, cette résine thermostable comprenant classiquement une résine fluorocarbonée, seule ou mélangée avec une ou plusieurs autres résines thermostables résistant à au moins 200°C.

Cette résine fluorocarbonée, dont les propriétés hydrophobes sont reconnues, peut être du polytétrafluoroéthylène (PTFE), du copolymère de tétrafluoroéthylène et de perfluoropropylvinyléther (PFA) ou du copolymère de tétrafluoroéthylène et d'hexafluoropropylène (FEP) ou un mélange de ces résines fluorocarbonées.

Les autres résines thermostables résistant à au moins 200°C peuvent être un polyamide imide (PAI), une sulfone de polyéthylène (PES), un sulfure de polyphénylène (PPS), une polyéthercétone (PEK), une polyétheréthercétone (PEEK) ou une silicone.

L'épaisseur du troisième revêtement anti-adhésif 5, 5' est de préférence comprise entre 30 et 45 µm.

Une troisième variante de l'invention est illustrée à la figure 3.

Sur cette figure 3, la première face 1a' du support 1 présente une certaine rugosité, par exemple réalisée par un traitement mécanique ou chimique préalable.

Sur cette première face 1a' est déposé le premier revêtement 2 de composition sol-gel tandis que sur la seconde face 1b est déposé le troisième revêtement anti-adhésif 5, 5', le deuxième revêtement 3, étant déposé sur le premier revêtement 2 de type sol-gel.

Des exemples de compositions sol-gel convenant pour la réalisation d'un article culinaire conforme à l'invention, quelle que soit la variante envisagée pour la réalisation de cet article culinaire, sont indiqués ci-après.

Le mode de préparation est identique et se déroule de la manière suivante : dans le solvant, on introduit, sous agitation, les précurseurs puis, toujours sous agitation, une solution catalytique.

Cette solution catalytique est de préférence une solution aqueuse acide, par exemple une solution molaire d'acide chlorhydrique HCl. De manière plus particulièrement préférée, le rapport molaire H₂O/M est compris entre 1 et 2,5.

Après introduction de la solution aqueuse acide, on laisse le mélange ainsi obtenu réagir sous agitation pendant 150 ± 30 minutes puis reposer pendant un minimum de 12 heures.

### Composition sol-gel A

Dans une enceinte thermostatée à 23°C, on introduit, dans un bécher, 800 g d'éthanol puis, successivement et sous agitation :
* 20 g de tetraéthylorthosilicate Si(OC₂H₅)₄,
* 40 g de méthyltriméthoxysilane Si(OCH₃)₃CH₃, puis
* 10 g d'une solution aqueuse molaire d'HCl.

On maintient l'agitation pendant 120 minutes et on laisse reposer le mélange ainsi obtenu, à température constante pendant 12 heures. La composition sol-gel A est prête pour l'application.

### Composition sol-gel B

Dans une enceinte thermostatée à 23°C, on introduit, dans un bécher, 600 g de n-propanol, puis successivement sous agitation :
* 30 g de tetraéthylorthosilicate Si(OC₂H₅)₄,
* 60 g de méthyltriméthoxysilane Si(OCH₃)₃CH₃,
* 10 g de propyltriéthoxysilane Si(OC₂H₅)₃C₃H₇, puis
* 10 g d'une solution aqueuse molaire d'HCl.

On maintient l'agitation pendant 180 minutes et on laisse reposer le mélange ainsi obtenu, à température constante pendant 12 heures. La composition sol-gel B est prête pour l'application.

### Composition sol-gel C

Dans une enceinte thermostatée à 23°C, on introduit, dans un bécher, 800 g d'éthanol, puis successivement sous agitation :
* 10 g de tetra n-propylsilicate Si(O-nC₃H₇)₄,
* 40 g de méthyltriéthoxysilane Si(OC₂H₅)₃CH₃,
* 10 g de propyltriethoxysilane Si(OC₂H₅)₃C₃H₇, puis
* 6 g d'une solution aqueuse molaire d'HCl.

On maintient l'agitation pendant 180 minutes et on laisse reposer le mélange ainsi obtenu, à température constante pendant 12 heures. La composition sol-gel C est prête pour l'application.

On verra, dans la suite de la présente description, qu'un mode préféré convenant pour l'application des compositions sol-gel mises en oeuvre dans le cadre de la présente invention, et notamment, pour l'application des compositions sol-gel A, B et C qui viennent d'être décrites, est l'application par pulvérisation.

Ces trois compositions sol-gel A, B et C conviennent tout particulièrement pour la fabrication d'articles culinaires dont le nettoyage en lave-vaisselle est à ce jour fortement déconseillé. Parmi ces articles, on peut notamment citer ceux réalisés en aluminium anodisé, ou en alliage d'aluminium anodisé, ou ceux comprenant un revêtement émaillé.

Un exemple de composition à base d'une résine silicone, destinée à former le deuxième revêtement 3 et convenant pour la réalisation d'un article culinaire conforme à l'invention, est donné ci-après :
- TEGO HTT
   résine polyester silicone commercialisée par la société TEGO.................................. 64,3%
- BYK 101
   additif d'étalement pour pulvérisation commercialisé par la société BYK-CHEMIE.......................0,3%
- BENTONE® SD2
   charge épaississante commercialisée par la société RHEOX,Inc.......................................0,1%
- ZFS 460
   agent de mouillage commercialisé par la société TEGO............................................0,3%
- DYNEON PTFE 9207
   poudre de PTFE micronisée commercialisée par la société 3M......................................6,4%
- acétate de butyl diglycol diluant..............23,9%
- silice pyrogénée
   agent de matage et de renfort :.................4,7%

Le mode de préparation se déroule de la manière suivante :
- on introduit dans un broyeur à billes tous les produits indiqués ci-dessus à l'exclusion de la silice pyrogénée,
- ces produits sont ensuite broyés pendant une durée de 1h30', puis
- la silice pyrogénée est incorporée ensuite au mélange sous agitation à 800 tr/minutes et pendant 5 minutes.

A titre d'illustration, on a représenté, sur la figure 4, un article culinaire 10, en l'espèce une poêle.

Cet article culinaire 10 comprend trois éléments principaux, un fond 11, une paroi latérale ou jupe 12, ainsi qu'un manche 13 de préhension.

Le fond 11 et la jupe 12 de l'article culinaire 10 comprennent le support 1.

Sur la première face 1a du support 1 de l'article culinaire 10 est déposé le premier revêtement 2. Sur ce premier revêtement 2 est déposé le deuxième revêtement 3, qui correspond à la face extérieure de l'article culinaire 10.

La seconde face 1b du support 1 de l'article culinaire 10 comporte le troisième revêtement anti-adhésif 5. Ce troisième revêtement anti-adhésif 5 correspond à la face intérieure de l'article culinaire 10 qui est destinée à recevoir les aliments, notamment pour leur cuisson.

Les premier et deuxième revêtements 2 et 3 recouvrent ainsi toute la surface extérieure du fond 11 et de la paroi latérale 12 de l'article culinaire 10, tandis que le troisième revêtement anti-adhésif 5 recouvre toute la surface intérieure du fond 11 et de la paroi latérale 12 de l'article culinaire 10.

Dans un premier mode de réalisation de l'invention, le procédé de fabrication d'un article culinaire conforme à l'invention comprend les étapes suivantes, réalisées par exemple sur le support 1 illustré sur les figures 1 et 2 :
- on applique, sur au moins une première face 1a du support 1, au moins une couche 2a d'une composition sol-gel comprenant un solvant et au moins les deux précurseurs explicités ci-avant, et on procède à la cuisson de ladite au moins une couche 2a pour obtenir le premier revêtement 2, puis
- on applique sur le premier revêtement 2 une couche d'une composition à base de silicone, et on procède à la cuisson pour obtenir le deuxième revêtement 3 dont l'épaisseur est comprise entre 15 et 25 µm.

Dans un deuxième mode de réalisation de l'invention, le procédé de fabrication comprend les étapes suivantes, réalisées par exemple sur le support 1 illustré à la figure 3 et réalisé en aluminium ou en alliage d'aluminium :
- on réalise une couche d'anodisation 4 sur au moins la première face 1a du support 1,
- on applique ensuite, sur la couche d'anodisation 4, au moins une couche 2a, 2b d'une composition sol-gel conforme à l'invention, puis on procède à la cuisson de ladite au moins une couche 2a, 2b pour obtenir le premier revêtement 2, puis
- on applique sur le premier revêtement 2 une couche d'une composition à base de silicone, et on procède à la cuisson pour obtenir le deuxième revêtement 3 dont l'épaisseur est comprise entre 15 et 25 µm.

La couche d'anodisation 4 est réalisée classiquement, par exemple par traitement électrolytique.

En variante, le procédé selon l'invention peut également comprendre la réalisation d'une première couche d'émail 4' sur au moins la première face 1a du support 1, préalablement à la réalisation du premier revêtement 2.

De manière classique, on réalise la première couche d'émail 4' par l'application, puis la cuisson, d'au moins une couche comprenant une fritte d'émail.

Dans un troisième mode de réalisation, le procédé de fabrication selon l'invention peut en outre comprendre, après l'étape de réalisation du premier revêtement 2, la réalisation, sur la seconde face 1b du support 1, d'un troisième revêtement anti-adhésif 5, 5' (voir figure 4).

De préférence, on réalise ce deuxième revêtement anti-adhésif 5 par l'application, sur la seconde face 1b du support 1, d'au moins une couche comprenant une résine thermostable résistant à au moins 200°C, par exemple une résine fluorocarbonée, telle que du PTFE.

L'application de la ou des couches comprenant une résine thermostable destinée(s) à former, après frittage, le troisième revêtement anti-adhésif 5, est réalisée selon les procédés bien connus de l'homme du métier et, notamment par pulvérisation. Un traitement mécanique préalable de la seconde face 1b du support 1, préalablement à cette application, pourra avantageusement être effectué.

Alternativement, on peut procéder à l'application d'au moins une couche comprenant une fritte d'émail pour obtenir, après cuisson, le troisième revêtement anti-adhésif 5'.

Il est bien évident que les différents modes de réalisation décrits précédemment peuvent être combinés entre eux pour aboutir à la fabrication d'articles culinaires qui certes comprennent les premier 2 et deuxième 3 revêtements, mais peuvent également comprendre une couche d'anodisation 4 ou une première couche d'émail 4', et/ou un deuxième revêtement anti-adhésif 5, 5'.

Quel que soit le mode de réalisation retenu, que ce mode de réalisation soit pris seul ou en combinaison avec un ou plusieurs autres modes de réalisation, les étapes énoncées ci-dessus sont de préférence réalisées sur un support 1 présentant la forme finale de l'article culinaire 10.

Ce support 1, lorsqu'il est réalisé en métal, peut notamment être mis en forme par emboutissage d'un disque métallique, notamment en aluminium, en alliage d'aluminium, acier inoxydable ou cuivre.

On peut cependant envisager de procéder à la mise en forme du support 1 après application de tout ou partie des couches, que celles-ci comprennent une composition sol-gel, une résine thermostable ou une silicone, appliquées dans le cadre du procédé conforme à l'invention, sous réserve de faisabilité industrielle.

Selon un mode préféré de l'invention, on applique la ou les couches 2a, 2b à base de composition sol-gel par pulvérisation.

Tout autre mode d'application, tel qu'au trempé, au tampon, au pinceau, au rouleau, par spin coating ou par sérigraphie reste envisageable.

Cependant, la pulvérisation, par exemple au moyen d'un pistolet, présente l'avantage de former des couches 2a, 2b homogènes et continues qui, après cuisson, forment un premier revêtement 2 continu, d'épaisseur régulière et étanche qui isole, selon le cas, le support 1, la couche d'anodisation 4 ou encore la première couche d'émail 4' formée sur le support 1, de l'environnement extérieur.

L'application au pistolet permet donc d'obtenir un premier revêtement 2 qui ne présente aucune surépaisseur, ni coulure.

L'application d'une ou de plusieurs couches 2a, 2b de très faible épaisseur permet, après cuisson, d'obtenir un premier revêtement 2 de très faible épaisseur, de l'ordre de 5 µm, pratiquement imperceptible pour l'utilisateur. Ce dernier n'est en effet pas en mesure de distinguer, tant au toucher que visuellement, un article culinaire comportant un premier revêtement 2 réalisé dans le cadre du procédé de l'invention, d'un article culinaire de l'état de la technique dépourvu d'un tel premier revêtement 2.

Ce constat est particulièrement vérifié lorsque l'on cherche à protéger un article culinaire en aluminium anodisé ou en alliage d'aluminium anodisé.

L'application du deuxième revêtement 3 à base de silicone est réalisée par pulvérisation.

Le deuxième revêtement 3 à base de silicone, déposé sur le premier revêtement 2 de type sol-gel, présente d'excellentes propriétés hydrophobes, qui sont meilleures que celles du premier revêtement 2 seul.

En particulier, à titre d'exemple, on observe que la mesure de l'angle de contact statique θ d'une goutte d'eau déposée sur le premier revêtement 2 déposé sur un support en aluminium anodisé indique des valeurs comprises entre 20° et 30°, sachant que la valeur de θ est voisine de 0° pour une mesure dans le cas d'une goutte d'eau déposée directement sur la surface d'un même support en aluminium anodisé non pourvu d'un premier revêtement 2 conforme à l'invention, la valeur 0° correspondant à un étalement complet d'une telle goutte.

Dans le cas d'un article culinaire conforme à l'invention, on observe que la mesure de l'angle de contact statique θ d'une goutte d'eau, déposée sur un revêtement 5 à base de silicone, atteint des valeurs comprises entre 60° et 80°.

En outre, l'article culinaire conforme à l'invention présente une très bonne résistance aux détergents utilisés en lave-vaisselle, ce constat ayant été validé par des tests qui ont tous mis en évidence une résistance de l'article conforme à la présente invention à pouvant aller jusque 300 cycles de lavage en lave-vaisselle, à une température d'au moins 65°C, aucune détérioration de l'aspect minéral de l'aluminium anodisé, ou de l'alliage d'aluminium anodisé, n'ayant été observé au bout de ces 300 cycles.

La résistance au lave-vaisselle du second revêtement anti-adhésif 5, 5', qu'il soit constitué par au moins une première couche d'émail 5' ou par au moins une couche à base de résine thermostable, n'est plus à démontrer.

La cuisson de la ou des couches 2a, 2b pour obtenir le premier revêtement 2, s'opère de manière classique à des températures entre 120°C et 200°C, et de préférence entre 150°C et 200°C.

La cuisson de la couche 3 à base de silicone s'opère à une température entre 150 et 200°C, après un séchage généralement effectué à une température de 150°C pendant trois minutes.

On peut procéder aux différentes étapes de cuisson de manière successive, pour obtenir l'article culinaire conforme à l'invention.

Toutefois, pour des raisons économiques évidentes, le procédé conforme à l'invention ne comprend préférentiellement qu'une seule étape de cuisson permettant la cuisson simultanée de ladite couche 2a, 2b et de ladite au moins une couche destinée à former le deuxième revêtement anti-adhésif 5, 5' et de ladite au moins une couche comprenant une silicone destinée à former le deuxième revêtement 3.

Une telle variante permet en effet d'optimiser le procédé selon l'invention, dans le sens où l'étape de cuisson nécessaire à l'obtention du second revêtement anti-adhésif 5, 5' est mise à profit pour l'obtention simultanée du premier revêtement 2 et du deuxième revêtement 3, de protection de l'article culinaire, sans engendrer de dépense énergétique supplémentaire.

Il est important de noter que cette étape de cuisson unique, qui peut mettre en oeuvre des températures élevées, notamment entre 300 et 400°C, pour le frittage des particules de résine thermostable et l'obtention du troisième revêtement anti-adhésif 3, ne détériore nullement la composition sol-gel et permet la formation des premier 2 et deuxième 3 revêtements, qui sont dotés des mêmes propriétés hydrophobes que s'ils avaient été cuits à une température comprise entre 120°C et 200°C telle que préconisée par les fournisseurs pour la réalisation de revêtements à partir de compositions sol-gel. De préférence, cette étape de cuisson unique est réalisée à une température de l'ordre de 320°C, pendant quinze minutes.

On peut envisager différentes utilisations mettant en oeuvre un article culinaire conforme à l'invention, que ce dernier soit destiné, ou non, à la cuisson d'aliments. A titre non limitatif, on citera notamment les articles culinaires tels que casseroles, poêles, friteuses, grills, plaques de barbecue, woks, auto-cuiseurs.

## Revendications

1. Article culinaire comprenant un support (1) et un premier revêtement (2), ledit premier revêtement (2) étant déposé sur au moins une première face (1a) du support (1) et étant obtenu par l'application, puis la cuisson, d'au moins une couche (2a, 2b) d'une composition sol-gel, **caractérisé en ce qu'**il comprend en outre au moins un deuxième revêtement (3) déposé sur le premier revêtement (2), ledit deuxième revêtement (3) étant obtenu par l'application, puis la cuisson, d'au moins une couche d'une composition à base de silicone, l'épaisseur du deuxième revêtement (3) variant de 15 à 25 µm.

2. Article culinaire selon la revendication 1, **caractérisé en ce que** la composition à base de silicone est constituée d'une huile silicone ou d'un mélange d'huiles silicones.

3. Article culinaire selon la revendication 2, **caractérisé en ce que** l'huile silicone est choisie parmi les méthyl-phényl silicones et les méthyl silicones.

4. Article culinaire selon la revendication 1, **caractérisé en ce que** la composition à base de silicone est constituée d'une résine silicone ou d'un mélange de résines silicones.

5. Article culinaire selon la revendication 4, **caractérisé en ce que** la résine silicone est une résine polyester silicone.

6. Article culinaire selon l'une quelconque des revendications précédentes, **caractérisé en ce que** la composition sol-gel de ladite couche (2a, 2b) comprend un solvant et au moins deux précurseurs, le premier précurseur étant un composé de formule générale M₁(OR₁)ₙ, M₁ étant un métal, R₁ étant un groupement alkyle et n étant un nombre entier correspondant à la valence maximale du métal M₁, le deuxième précurseur étant un composé de formule générale M₂(OR₂)₍ₙ₋ₚ₎R₂'ₚ, M₂ étant un métal, R₂ étant un groupement alkyle, R₂' étant un groupement alkyle, phényle ou cyclohexyle, n étant un nombre entier correspondant à la valence maximale du métal M₂ et p=1, M₁ et M₂ étant individuellement choisis parmi Si, Zr, Ti, Sn, Al, Ce, Nb ou Ln.

7. Article culinaire selon la revendication 6, **caractérisé en ce que** la composition sol-gel de ladite couche (2a, 2b) comprend en outre un troisième précurseur, ce troisième précurseur étant un composé de formule générale M₃(OR₃)₍ₙ₋ₚ₎R₃'ₚ, M₃ étant un métal choisi parmi Si, Zr, Ti, Sn, Al, Ce, Nb ou Ln, R₃ et R₃' étant chacun un groupement alkyle, n étant un nombre entier correspondant à la valence maximale du métal M₃ et p=2.

8. Article culinaire selon la revendication 6 ou 7, **caractérisé en ce que** la proportion pondérale pour chacun des premier, deuxième et, le cas échéant, troisième précurseurs est telle que :
* de 10 à 50% de premier précurseur M₁(OR₁)ₙ,
* de 50 à 90% de deuxième précurseur M₂(OR₂)₍ₙ₋ₚ₎R₂'ₚ, et
* de 0 à 20% de troisième précurseur M₃(OR₃)₍ₙ₋ₚ₎R₃'ₚ.

9. Article culinaire selon l'une quelconque des revendications 6 à 8, **caractérisé en ce que**
* M₁(OR₁)ₙ est tel que R₁ est un alkyle en C₁-C₄ ;
* M₂(OR₂)₍ₙ₋ₚ₎R₂'ₚ est tel que R₂ est un alkyle linéaire, de préférence en C₁-C₃, et R₂' est un alkyle en C₁-C₃ ; et, le cas échéant,
* M₃(OR₃)₍ₙ₋ₚ₎R₃'ₚ est tel que R₃ est un alkyle linéaire, de préférence en C₁-C₃, et R₃' est un alkyle en C₁-C₃, de préférence CH₃ ou C₂H₅.

10. Article culinaire selon l'une quelconque des revendications précédentes, **caractérisé en ce que** l'épaisseur du premier revêtement (2) est d'environ 25 µm.

11. Article culinaire selon l'une quelconque des revendications précédentes, **caractérisé en ce que** le support (1) est métallique, notamment en aluminium anodisé ou non ou en alliage d'aluminium poli, brossé ou microbillé, en acier inoxydable poli, brossé ou microbillé, en fonte, en cuivre martelé ou poli, en verre ou en céramique.

12. Article culinaire selon la revendication 11, **caractérisé en ce que** le support (1), réalisé en aluminium ou en alliage d'aluminium, présente, au moins sur sa première face (1a), une couche d'anodisation (4) sur laquelle est déposé le premier revêtement (2), l'épaisseur de la couche d'anodisation (4) étant de préférence comprise entre 5 et 100 µm.

13. Article culinaire selon l'une quelconque des revendications 1 à 11, **caractérisé en ce que** le support (1) présente, au moins sur sa première face (1a), une première couche d'émail (4') sur laquelle est déposé le premier revêtement (2), l'épaisseur de la première couche d'émail (4') étant de préférence comprise entre 40 et 100 µm.

14. Article culinaire selon l'une quelconque des revendications précédentes, **caractérisé en ce qu'**il comprend en outre un troisième revêtement anti-adhésif (5, 5') déposé sur la seconde face (1b) du support (1), l'épaisseur du troisième revêtement anti-adhésif (5, 5') étant de préférence comprise entre 30 et 45 µm.

15. Article culinaire selon la revendication 14, **caractérisé en ce que** le troisième revêtement anti-adhésif est obtenu à partir d'une composition comprenant au moins une résine thermostable résistant à au moins 200°C, par exemple une résine fluorocarbonée, telle que du PTFE (5).

16. Article culinaire selon la revendication 14, **caractérisé en ce que** le troisième revêtement anti-adhésif est constitué par au moins une deuxième couche d'émail (5').

17. Procédé de fabrication d'un article culinaire présentant des propriétés hydrophobes améliorées, notamment une résistance améliorée aux détergents utilisés dans les lave-vaisselle, ce procédé comprenant les étapes suivantes réalisées sur un support (1), ledit support (1) présentant de préférence la forme finale de l'article culinaire :
- l'application, sur au moins une première face (1a) du support (1), d'au moins une couche (2a, 2b) d'une composition sol-gel, puis
- la cuisson de ladite couche (2a, 2b) pour obtenir un premier revêtement (2),
**caractérisé en ce qu'**il comprend en outre, après l'étape de réalisation du premier revêtement (2), la réalisation d'au moins un deuxième revêtement (3) par application sur le premier revêtement (2), puis cuisson d'au moins une couche (3) d'une composition à base de silicone, dont l'épaisseur est comprise entre 15 et 25 µm.

18. Procédé selon la revendication 17, **caractérisé en ce que** la composition à base de silicone est constituée d'une huile silicone ou d'un mélange d'huiles silicones.

19. Procédé selon la revendication 18, **caractérisé en ce que** l'huile silicone est choisie parmi les méthyl-phényl silicones et les méthyl silicones.

20. Procédé selon la revendication 17, **caractérisé en ce que** la composition à base de silicone est constituée d'une résine silicone ou d'un mélange de résines silicones.

21. Procédé selon la revendication 20, **caractérisé en ce que** la résine silicone est une résine polyester silicone.

22. Procédé selon l'une quelconque des revendications 17 à 21, **caractérisé en ce que** la composition sol-gel de ladite couche (2a, 2b) comprend un solvant et au moins deux précurseurs, le premier précurseur étant un composé de formule générale M₁(OR₁)ₙ, M₁ étant un métal, R₁ étant un groupement alkyle et n étant un nombre entier correspondant à la valence maximale du métal M₁, le deuxième précurseur étant un composé de formule générale M₂(OR₂)₍ₙ₋ₚ₎R₂'ₚ, M₂ étant un métal, R₂ étant un groupement alkyle, R₂' étant un groupement alkyle, phényle ou cyclohexyle, n étant un nombre entier correspondant à la valence maximale du métal M₂ et p=1, et, le cas échéant, un troisième précurseur, ce troisième précurseur étant un composé de formule générale M₃(OR₃)₍ₙ₋ₚ₎R₃'ₚ, M₃ étant un métal, R₃ étant un groupement alkyle, R₃' étant un groupement alkyle, n étant un nombre entier correspondant à la valence maximale du métal M₃ et p=2, M₁, M₂ et, le cas échéant, M₃ étant individuellement choisis parmi Si, Zr, Ti, Sn, Al, Ce, Nb ou Ln.

23. Procédé selon l'une quelconque des revendications 17 à 22, **caractérisé en ce que** le support (1) est métallique, notamment en aluminium, en alliage d'aluminium poli, brossé ou microbillé, en acier inoxydable poli, brossé ou microbillé, en fonte, en cuivre martelé ou poli, en verre ou en céramique.

24. Procédé selon la revendication 23, le support (1) étant réalisé en aluminium ou en alliage d'aluminium, **caractérisé en ce qu'**il comprend en outre la réalisation d'une couche d'anodisation (4) sur au moins la première face (1a) du support (1), préalablement à l'application d'au moins une couche (2a, 2b) de composition sol-gel.

25. Procédé selon la l'une quelconque des revendications 17 à 23, **caractérisé en ce qu'**il comprend en outre la réalisation d'une première couche d'émail (4') sur au moins la première face (1a) du support (1), préalablement à l'application d'au moins une couche (2a, 2b) de composition sol-gel.

26. Procédé selon l'une quelconque des revendications 17 à 25, **caractérisé en ce qu'**il comprend en outre, après l'étape de réalisation du premier revêtement (2), la réalisation, sur la seconde face (1b) du support (1), d'un troisième revêtement anti-adhésif (5, 5').

27. Procédé selon la revendication 26, **caractérisé en ce que** l'on réalise le troisième revêtement anti-adhésif (5) par l'application, puis la cuisson, d'au moins une couche comprenant une résine thermostable résistant à au moins 200°C, par exemple une résine fluorocarbonée telle que du PTFE.

28. Procédé selon la revendication 26 ou 27, **caractérisé en ce qu'**il ne comprend qu'une seule étape de cuisson permettant la cuisson simultanée de ladite couche (2a, 2b) d'une composition sol-gel, de ladite couche d'une composition à base de silicone destinée à former le deuxième revêtement (3), et de ladite couche destinée à former le troisième revêtement anti-adhésif (5, 5').

## Patentansprüche

1. Küchengegenstand, der einen Träger (1) und eine erste Beschichtung (2) umfasst, wobei die erste Beschichtung (2) auf wenigstens einer ersten Seite (1a) des Trägers (1) aufgebracht ist und durch das Auftragen, anschließend das Brennen, von wenigstens einer Schicht (2a, 2b) einer Sol-Gel-Zusammensetzung erhalten wird, **dadurch gekennzeichnet, dass** er weiter wenigstens eine zweite Beschichtung (3) umfasst, die auf der ersten Beschichtung (2) aufgebracht ist, wobei die zweite Beschichtung (3) durch das Auftragen, anschließend das Brennen, von wenigstens einer Schicht einer Zusammensetzung auf Silikonbasis erhalten wird, wobei die Dicke der zweiten Beschichtung (3) von 15 bis 25 µm schwankt.

2. Küchengegenstand nach Anspruch 1, **dadurch gekennzeichnet, dass** die Zusammensetzung auf Silikonbasis aus einem Silikonöl oder aus einer Mischung von Silikonölen besteht.

3. Küchengegenstand nach Anspruch 2, **dadurch gekennzeichnet, dass** das Silikonöl aus den Methylphenylsilikonen und den Methylsilikonen ausgewählt ist.

4. Küchengegenstand nach Anspruch 1, **dadurch gekennzeichnet, dass** die Zusammensetzung auf Silikonbasis aus einem Silikonharz oder aus einer Mischung von Silikonharzen besteht.

5. Küchengegenstand nach Anspruch 4, **dadurch gekennzeichnet, dass** das Silikonharz ein Polyester-Silikonharz ist.

6. Küchengegenstand nach einem der vorhergehenden Ansprüche, **dadurch gekennzeichnet, dass** die Sol-Gel-Zusammensetzung der Schicht (2a, 2b) ein Lösungsmittel und wenigstens zwei Vorläufer umfasst, wobei der erste Vorläufer eine Verbindung der allgemeinen Formel M₁(OR₁)ₙ ist, wobei M₁ ein Metall ist, R₁ eine Alkylgruppe ist und n eine ganze Zahl ist, die der maximalen Wertigkeit des Metalls M₁ entspricht, wobei der zweite Vorläufer eine Verbindung der allgemeinen Formel M₂(OR₂)₍ₙ₋ₚ₎R₂'ₚ ist, wobei M₂ ein Metall ist, R₂ eine Alkylgruppe ist, R₂' eine Alkyl-, Phenyl- oder Cyclohexylgruppe ist, n eine ganze Zahl ist, die der maximalen Wertigkeit des Metalls M₂ entspricht, und p = 1 ist, wobei M₁ und M₂ einzeln aus Si, Zr, Ti, Sn, Al, Ce, Nb oder Ln ausgewählt sind.

7. Küchengegenstand nach Anspruch 6, **dadurch gekennzeichnet, dass** die Sol-Gel-Zusammensetzung der Schicht (2a, 2b) weiter einen dritten Vorläufer umfasst, wobei dieser dritte Vorläufer eine Verbindung der allgemeinen Formel M₃(OR₃)₍ₙ₋ₚ₎R₃'ₚ ist, wobei M₃ ein Metall ist, das aus Si, Zr, Ti, Sn, Al, Ce, Nb oder Ln ausgewählt ist, R₃ und R₃' jedes eine Alkylgruppe sind, n eine ganze Zahl ist, die der maximalen Wertigkeit des Metalls M₃ entspricht, und P = 2 ist.

8. Küchengegenstand nach Anspruch 6 oder 7, **dadurch gekennzeichnet, dass** der Gewichtsanteil für jeden des ersten, zweiten, und gegebenenfalls dritten Vorläufers derart ist, dass:
* 10 bis 50% des ersten Vorläufers M₁(OR₁)ₙ,
* 50 bis 90% des zweiten Vorläufers M₂(OR₂)₍ₙ₋ₚ₎R₂'ₚ, und
* 0 bis 20% des dritten Vorläufers M₃(OR₃)₍ₙ₋ₚ₎R₃'ₚ.

9. Küchengegenstand nach einem der Ansprüche 6 bis 8, **dadurch gekennzeichnet, dass**
* M₁(OR₁)ₙ derart ist, dass R₁ ein Alkyl mit C₁-C₄ ist;
* M₂(OR₂)₍ₙ₋ₚ₎R₂'ₚ derart ist, dass R₂ ein geradkettiges Alkyl, bevorzugt mit C₁-C₃ ist, und R₂' ein Alkyl mit C₁-C₃ ist; und, gegebenenfalls,
* M₃(OR₃)₍ₙ₋ₚ₎R₃'ₚ derart ist, dass R₃ ein geradkettiges Alkyl, bevorzugt mit C₁-C₃ ist, und R₃' ein Alkyl mit C₁-C₃, bevorzugt CH₃ oder C₂H₅ ist.

10. Küchengegenstand nach einem der vorhergehenden Ansprüche, **dadurch gekennzeichnet, dass** die Dicke der ersten Beschichtung (2) rund 25 µm beträgt.

11. Küchengegenstand nach einem der vorhergehenden Ansprüche, **dadurch gekennzeichnet, dass** der Träger (1) metallisch ist, insbesondere aus eloxiertem oder nicht eloxiertem Aluminium oder aus polierter, gebürsteter oder perlgestrahlter Aluminiumlegierung, aus poliertem, gebürstetem oder perlgestrahltem Edelstahl, aus Gusseisen, aus gehämmertem oder poliertem Kupfer, aus Glas oder aus Keramik.

12. Küchengegenstand nach Anspruch 11, **dadurch gekennzeichnet, dass** der Träger (1), der aus Aluminium oder aus Aluminiumlegierung ausgeführt ist, wenigstens auf seiner ersten Seite (1a) eine Eloxierschicht (4) aufweist, auf der die erste Beschichtung (2) aufgebracht ist, wobei die Dicke der Eloxierschicht (4) bevorzugt im Bereich zwischen 5 und 100 µm liegt.

13. Küchengegenstand nach einem der Ansprüche 1 bis 11, **dadurch gekennzeichnet, dass** der Träger (1) wenigstens auf seiner ersten Seite (1a) eine erste Emailleschicht (4') aufweist, auf der die erste Beschichtung (2) aufgebracht ist, wobei die Dicke der ersten Emailleschicht (4') bevorzugt im Bereich zwischen 40 und 100 µm liegt.

14. Küchengegenstand nach einem der vorhergehenden Ansprüche, **dadurch gekennzeichnet, dass** er weiter eine dritte Antihaftbeschichtung (5, 5') umfasst, die auf der zweiten Seite (1b) des Trägers (1) aufgebracht ist, wobei die Dicke der dritten Antihaftbeschichtung (5, 5') bevorzugt im Bereich zwischen 30 und 45 µm liegt.

15. Küchengegenstand nach Anspruch 14, **dadurch gekennzeichnet, dass** die dritte Antihaftbeschichtung ausgehend von einer Zusammensetzung erhalten wird, die wenigstens ein thermostabiles Harz umfasst, das wenigstens 200°C widersteht, zum Beispiel ein Fluorkohlenstoffharz wie etwa PTFE (5).

16. Küchengegenstand nach Anspruch 14, **dadurch gekennzeichnet, dass** die dritte Antihaftbeschichtung aus wenigstens einer zweiten Emailleschicht (5') besteht.

17. Verfahren zur Herstellung eines Küchengegenstandes, der verbesserte hydrophobe Eigenschaften, insbesondere eine verbesserte Beständigkeit gegenüber den in den Spülmaschinen verwendeten Reinigungsmitteln aufweist, wobei dieses Verfahren die folgenden Schritte umfasst, die auf einem Träger (1) ausgeführt werden, wobei der Träger (1) bevorzugt die Endform des Küchengegenstandes aufweist:
- das Auftragen, auf wenigstens eine erste Seite (1a) des Trägers (1), von wenigstens einer Schicht (2a, 2b) einer Sol-Gel-Zusammensetzung, anschließend
- das Brennen der Schicht (2a, 2b), um eine erste Beschichtung (2) zu erhalten,
**dadurch gekennzeichnet, dass** es weiter, nach dem Schritt des Ausführens der ersten Beschichtung (2), das Ausführen von wenigstens einer zweiten Beschichtung (3) durch Auftragen auf der ersten Beschichtung (2), anschließend Brennen, von wenigstens einer Schicht (3) einer Zusammensetzung auf Silikonbasis umfasst, deren Dicke im Bereich zwischen 15 und 25 µm liegt.

18. Verfahren nach Anspruch 17, **dadurch gekennzeichnet, dass** die Zusammensetzung auf Silikonbasis aus einem Silikonöl oder aus einer Mischung von Silikonölen besteht.

19. Verfahren nach Anspruch 18, **dadurch gekennzeichnet, dass** das Silikonöl aus den Methylphenylsilikonen und den Methylsilikonen ausgewählt ist.

20. Verfahren nach Anspruch 17, **dadurch gekennzeichnet, dass** die Zusammensetzung auf Silikonbasis aus einem Silikonharz oder aus einer Mischung von Silikonharzen besteht.

21. Verfahren nach Anspruch 20, **dadurch gekennzeichnet, dass** das Silikonharz ein Polyester-Silikonharz ist.

22. Verfahren nach einem der Ansprüche 17 bis 21, **dadurch gekennzeichnet, dass** die Sol-Gel-Zusammensetzung der Schicht (2a, 2b) ein Lösungsmittel und wenigstens zwei Vorläufer umfasst, wobei der erste Vorläufer eine Verbindung der allgemeinen Formel M₁(OR₁)ₙ ist, wobei M₁ ein Metall ist, R₁ eine Alkylgruppe ist und n eine ganze Zahl ist, die der maximalen Wertigkeit des Metalls M₁ entspricht, wobei der zweite Vorläufer eine Verbindung der allgemeinen Formel M₂(OR₂)₍ₙ₋ₚ₎R₂'ₚ ist, wobei M₂ ein Metall ist, R₂ eine Alkylgruppe ist, R₂' eine Alkyl-, Phenyl- oder Cyclohexylgruppe ist, n eine ganze Zahl ist, die der maximalen Wertigkeit des Metalls M₂ entspricht, und p = 1 ist, und gegebenenfalls einen dritten Vorläufer, wobei dieser dritte Vorläufer eine Verbindung der allgemeinen Formel M₃(OR₃)₍ₙ₋ₚ₎R₃'ₚ ist, wobei M₃ ein Metall ist, R₃ eine Alkylgruppe ist, R₃' eine Alkylgruppe ist, n eine ganze Zahl ist, die der maximalen Wertigkeit des Metalls M₃ entspricht, und P = 2 ist, wobei M₁, M₂, und gegebenenfalls M₃ einzeln aus Si, Zr, Ti, Sn, Al, Ce, Nb oder Ln ausgewählt sind.

23. Verfahren nach einem der Ansprüche 17 bis 22, **dadurch gekennzeichnet, dass** der Träger (1) metallisch ist, insbesondere aus Aluminium, aus polierter, gebürsteter oder perlgestrahlter Aluminiumlegierung, aus poliertem, gebürstetem oder perlgestrahltem Edelstahl, aus Gusseisen, aus gehämmertem oder poliertem Kupfer, aus Glas oder aus Keramik.

24. Verfahren nach Anspruch 23, wobei der Träger (1) aus Aluminium oder aus Aluminiumlegierung ausgeführt ist, **dadurch gekennzeichnet, dass** es vor dem Auftragen von wenigstens einer Schicht (2a, 2b) Sol-Gel-Zusammensetzung weiter das Ausführen einer Eloxierschicht (4) auf wenigstens der ersten Seite (1a) des Trägers (1) umfasst.

25. Verfahren nach einem der Ansprüche 17 bis 23, **dadurch gekennzeichnet, dass** es vor dem Auftragen von wenigstens einer Schicht (2a, 2b) Sol-Gel-Zusammensetzung weiter das Ausführen einer ersten Emailleschicht (4') auf wenigstens der ersten Seite (1a) des Trägers (1) umfasst.

26. Verfahren nach einem der Ansprüche 17 bis 25, **dadurch gekennzeichnet, dass** es weiter, nach dem Schritt des Ausführens der ersten Beschichtung (2), das Ausführen, auf der zweiten Seite (1b) des Trägers (1), einer dritten Antihaftbeschichtung (5, 5') umfasst.

27. Verfahren nach Anspruch 26, **dadurch gekennzeichnet, dass** die dritte Antihaftbeschichtung (5) durch das Auftragen, anschließend das Brennen, von wenigstens einer Schicht erhalten wird, die ein thermostabiles Harz umfasst, das wenigstens 200°C widersteht, zum Beispiel ein Fluorkohlenstoffharz wie etwa PTFE.

28. Verfahren nach Anspruch 26 oder 27, **dadurch gekennzeichnet, dass** es nur einen einzigen Brennschritt umfasst, der das gleichzeitige Brennen der Schicht (2a, 2b) einer Sol-Gel-Zusammensetzung, der Schicht einer Zusammensetzung auf Silikonbasis, die dazu bestimmt ist, die zweite Beschichtung (3) zu bilden, und der Schicht umfasst, die dazu bestimmt ist, die dritte Antihaftbeschichtung (5, 5') zu bilden.

## Claims

1. Cooking utensil comprising a support (1) and a first coating (2), said first coating (2) being deposited on at least one first face (1a) of the support (1) and being obtained by the applying, then the curing, of at least one layer (2a, 2b) of a sol-gel composition, **characterised in that** it further comprises at least one second coating (3) deposited on the first coating (2), said second coating (3) being obtained by the applying, then the curing, of at least one layer of a silicone-based composition, with the thickness of the second coating (3) varying from 15 to 25 µm.

2. Cooking utensil according to claim 1, **characterised in that** the silicone-based composition is comprised of a silicone oil or of a mixture of silicone oils.

3. Cooking utensil according to claim 2, **characterised in that** the silicone oil is chosen from methyl-phenyl silicones and methyl silicones.

4. Cooking utensil according to claim 1, **characterised in that** the silicone-based composition is comprised of a silicone resin or of a mixture of silicone resins.

5. Cooking utensil according to claim 4, **characterised in that** the silicone resin is a silicone polyester resin.

6. Cooking utensil according to any one of the preceding claims, **characterised in that** the sol-gel composition of said layer (2a, 2b) comprises a solvent and at least two precursors, with the first precursor being a compound of the general formula M₁(OR₁)ₙ, M₁ being a metal, R₁ being an alkyl group and n being an integer corresponding to the maximum valency of the metal M₁, with the second precursor being a compound of the general formula M₂(OR₂)₍ₙ₋ₚ₎R₂'ₚ, M₂ being a metal, R₂ being an alkyl group, R₂' being an alkyl, phenyl or cyclohexyl group, n being an integer corresponding to the maximum valency of the metal M₂ and p=1, M₁ and M₂ being chosen individually from Si, Zr, Ti, Sn, Al, Ce, Nb or Ln.

7. Cooking utensil according to claim 6, **characterised in that** the sol-gel composition of said layer (2a, 2b) further comprises a third precursor, with this third precursor being a compound of the general formula M₃(OR₃)₍ₙ₋ₚ₎R₃'ₚ, M₃ being a metal chosen from Si, Zr, Ti, Sn, Al, Ce, Nb or Ln, R₃ and R₃' with each one being an alkyl group, n being an integer corresponding to the maximum valency of the metal M₃ and p=2.

8. Cooking utensil according to claim 6 or 7, **characterised in that** the weight ratio for each one of the first, second and, where applicable, third precursors is such that:
* from 10 to 50% of the first precursor M₁(OR₁)ₙ,
* from 50 to 90% of the second precursor M₂(OR₂)₍ₙ₋ₚ₎R₂'ₚ, and
* from 0 to 20% of the third precursor M₃(OR₃)₍ₙ₋ₚ₎R₃'ₚ.

9. Cooking utensil according to one of claims 6 to 8, **characterised in that**
* M₁(OR₁)ₙ is such that R₁ is a C₁-C₄ alkyl;
* M₂(OR₂)₍ₙ₋ₚ₎R₂'ₚ is such that R₂ is a linear alkyl, preferably as C₁-C₃, and R₂' is a C₁-C₃ alkyl; and, where applicable,
* M₃(OR₃)₍ₙ₋ₚ₎R₃'ₚ is such that R₃ is a linear alkyl, preferably as C₁-C₃, and R₃' is a C₁-C₃ alkyl, preferably CH₃ or C₂H₅.

10. Cooking utensil as claimed in any preceding claim, **characterised in that** the thickness of the first coating (2) is about 25 µm.

11. Cooking utensil according to any one of the preceding claims, **characterised in that** the support (1) is made of metal, in particular made of aluminium that is anodised or not or made from polished, brushed or shot-peened aluminium, of polished, brushed or shot-peened stainless steel, of cast iron, of hammered or polished copper, of glass or of ceramic.

12. Cooking utensil according to claim 11, **characterised in that** the support (1), made from aluminium or an aluminium alloy, has, at least on its first face (1a), an anodization layer (4) whereon the first coating (2) is deposited, with the thickness of the anodization layer (4) being preferably between 5 and 100 µm.

13. Cooking utensil according to one of claims 1 to 11, **characterised in that** the support (1) has, at least on its first face (1a), a first layer of enamel (4') whereon the first coating (2) is deposited, with the thickness of the first layer of enamel (4') being preferably between 40 and 100 µm.

14. Cooking utensil according to any one of the preceding claims, **characterised in that** it further comprises a third non-stick coating (5, 5') deposited on the second face (1b) of the support (1), the thickness of the third non-stick coating (5, 5') being preferably between 30 and 45 µm.

15. Cooking utensil according to claim 14, **characterised in that** the third non-stick coating is obtained using a composition comprising at least one thermostable resin that is resistant to at least 200°C, for example a fluorocarbon resin, such as PTFE (5).

16. Cooking utensil according to claim 14, **characterised in that** the third non-stick coating is comprised of at least one second layer of enamel (5').

17. Method for manufacturing a cooking utensil with improved hydrophobic properties, in particular an improved resistance to the detergents used in dishwashers, with this method comprising the following steps carried out on a support (1), said support (1) having preferably the final form of the cooking utensil:
- the applying, on at least one first face (1a) of the support (1), of at least one layer (2a, 2b) of a sol-gel composition, then
- the curing of said layer (2a, 2b) in order to obtain a coating (2),
**characterised in that** it further comprises, after the step of realising of the first coating (2), the realisation of at least one second coating (3) by applying on the first coating (2), then curing of at least one layer (3) of a silicone-based composition, of which the thickness is between 15 and 25 µm.

18. Method according to claim 17, **characterised in that** the silicone-based composition is comprised of a silicone oil or of a mixture of silicone oils.

19. Method according to claim 18, **characterised in that** the silicone oil is chosen from methyl-phenyl silicones and methyl silicones.

20. Method according to claim 17, **characterised in that** the silicone-based composition is comprised of a silicone resin or of a mixture of silicone resins.

21. Method according to claim 20, **characterised in that** the silicone resin is a silicone polyester resin.

22. Method according to any one of claims 17 to 21, **characterised in that** the sol-gel composition of said layer (2a, 2b) comprises a solvent and at least two precursors, with the first precursor being a compound of the general formula M₁(OR₁)ₙ, M₁ being a metal, R₁ being an alkyl group and n being an integer corresponding to the maximum valency of the metal M₁, with the second precursor being a compound of the general formula M₂(OR₂)₍ₙ₋ₚ₎R₂'ₚ, M₂ being a metal, R₂ being an alkyl group, R₂' being an alkyl, phenyl or cyclohexyl group, n being an integer corresponding to the maximum valency of the metal M₂ and p=1, and, where applicable, a third precursor, with this third precursor being a compound of the general formula M₃(OR₃)₍ₙ₋ₚ₎R₃'ₚ, M₃ being a metal, R₃ an alkyl group, R₃' being an alkyl group, n being an integer corresponding to the maximum valency of the metal and p=2, M1, M2, and where applicable, M₃ being individually chosen from Si, Zr, Ti, Sn, Al, Ce, Nb or Ln.

23. Method according to any one of claims 17 to 22, **characterised in that** the support (1) is made of metal, in particular made of aluminium, of a polished, brushed or micro-blasted aluminium, of polished, brushed or shot-peened stainless steel, of cast iron, of hammered or polished copper, of glass or of ceramic.

24. Method according to claim 23, with the support (1) being made from aluminium or from an aluminium alloy, **characterised in that** it further comprises the realisation of a layer of anodization (4) on at least the first face (1a) of the support (1), prior to the applying of at least one layer (2a, 2b) of sol-gel composition.

25. Method according to any one of claims 17 to 23, **characterised in that** it further comprises the realisation of a layer of enamel (4') on at least the first face (1a) of the support (1), prior to the applying of at least one layer (2a, 2b) of sol-gel composition.

26. Method according to any one of claims 17 to 25, **characterised in that** it further comprises, after the step of realising the first coating (2), the realisation, on the second face (1b) of the support (1), of a third non-stick coating (5, 5').

27. Method according to claim 26, **characterised in that** the third non-stick coating (5) is carried out by the applying, then the curing, of at least one layer comprising a thermostable resin that is resistant to at least 200°C, for example a resin such as PTFE.

28. Method according to claim 26 or 27, **characterised in that** it comprises only one step of curing allowing for the simultaneous curing of said layer (2a, 2b) of a sol-gel composition, of said layer of a silicone-based composition intended to form the second coating (3), and of said layer intended to form the third non-stick coating (5, 5').
